# DEMANDE DE BREVET EUROPEEN

(11) **EP 1 669 906 A1**
(43) Date de publication de la demande: **14.06.2006**
(21) Numéro de dépôt: 05300917.1
(22) Date de dépôt: 14.11.2005
(51) Int. Cl.: G06F 21/00

(54) **Procédé de sécurisation pour appareil électronique**

(30) Priorité: 08.12.2004 FR 0452903
(71) Demandeur: Ercom Engineering Réseaux Communications, 78140 Vélizy-Villacoublay (FR)
(72) Inventeur: Laubacher, Eric, 78180, Montigny Le Bretonneux (FR)
(74) Mandataire: Grynwald, Albert

(57) **Abrégé**

L'invention se rapporte à un procédé de sécurisation pour appareils électroniques disposant d'une mémoire destinée à contenir des données, notamment utilisé pour sécuriser un ordinateur de poche (10) de type « Personal Digital Assistant (PDA) ». Ce procédé utilise un code de sécurité long permanent et un code de sécurité court valable pendant une durée déterminée et/ou un nombre déterminé d'utilisations, et il est tel que l'appareil électronique se trouve dans l'un des trois états de sécurité suivants :
- état déverrouillé dans lequel l'accès aux données sensibles n'est pas protégé,
- état de verrouillage intermédiaire dans lequel l'accès aux données sensibles est conditionné par une authentification légère, c'est-à-dire l'entrée du code court, et
- état sécurisé dans lequel l'accès aux données sensibles est conditionné par une authentification complète, c'est-à-dire l'entrée du code long permanent, et qui conduit au renouvellement du code court éphémère.

## Description

La présente invention concerne un procédé de sécurisation pour appareils électroniques disposant d'une mémoire destinée à contenir des données.

Dans l'état actuel de la technique, les appareils électroniques, tels que les ordinateurs de poche de type PDA, sont sécurisés par un mot de passe, par exemple un code à quatre chiffres, qu'il faut entrer dans l'appareil afin de pouvoir l'utiliser. Dans le cas d'un PDA, le code doit être entré sur un clavier virtuel aux dimensions réduites, ce qui ne rend pas la saisie facile pour l'utilisateur. On peut aussi utiliser des touches virtuelles de plus grandes dimensions, mais dans ce cas le code est beaucoup moins efficace, puisque les touches sont plus facilement repérables par une personne mal intentionnée qui observe l'entrée du code. De façon générale, un code de longueur moyenne « s'use » rapidement car il est repérable et mémorisable par des personnes qui peuvent côtoyer l'utilisateur du code.
Ce problème d'usure de code se retrouve également dans des appareils de type téléphone portable ou ordinateur, puisque les codes, qui doivent être suffisamment courts pour être mémorisables, sont également susceptibles d'être repérés par une personne qui verrait l'utilisateur entrer le même code tous les jours.
De plus, les PDA présentent l'inconvénient de disposer de très peu d'entropie, c'est-à-dire qu'ils ne disposent que d'une faible source de hasard, et donc les clés de chiffrement générées par un PDA sont relativement faciles à décrypter.

L'invention vise à remédier à au moins certains de ces inconvénients.

L'invention concerne un procédé de sécurisation pour appareils électroniques disposant d'une mémoire destinée à contenir des données, notamment utilisé pour sécuriser un ordinateur de poche de type « Personal Digital Assistant (PDA) ». Ce procédé utilise un code de sécurité long permanent et un code de sécurité court valable pendant une durée déterminée et/ou un nombre déterminé d'utilisations, et il est tel que l'appareil électronique se trouve dans l'un des trois états de sécurité suivants :
- état déverrouillé dans lequel l'accès à des données sensibles n'est pas protégé,
- état de verrouillage intermédiaire dans lequel l'accès aux données sensibles est conditionné par une authentification légère, c'est-à-dire l'entrée du code court, et
- état sécurisé dans lequel l'accès aux données sensibles est conditionné par une authentification complète, c'est-à-dire l'entrée du code long permanent, et qui conduit au renouvellement du code court éphémère.

On précise ici que par « données sensibles » on entend des données utilisateurs.
De façon générale, un appareil électronique selon l'invention présente une mémoire qui contient plusieurs types de données :
- Des données de type « données système », propres à l'appareil en lui-même, et qui ne dépendent pas de l'utilisateur. Ces données n'ont pas besoin d'être protégées puisqu'elles sont identiques sur tous les appareils électroniques du même type.
- Des données utilisateurs, dites « données sensibles », qui contiennent des informations personnelles de l'utilisateur. Ces données sont conservées en mémoire sous une forme chiffrée.
- Eventuellement un autre type de données utilisateurs, nécessitant un degré de protection supérieur.
   Le système selon l'invention présente l'avantage d'offrir une très grande sécurité à l'appareil électronique sans imposer de contraintes trop gênantes pour l'utilisateur. En effet, l'utilisateur n'utilise le code long permanent que de façon épisodique ; il peut donc choisir un moment où il est à l'abri de tous regards indiscrets pour l'entrer dans l'appareil. De plus, même si ce code est trop long pour pouvoir être mémorisé, l'utilisateur peut le conserver sur lui et, lorsqu'il a besoin de s'identifier de manière complète, s'isoler afin d'éviter tout repérage du code par une personne mal intentionnée. Le code court, quant à lui, n'étant valable que pendant une durée déterminée, ne peut être sujet à une usure même s'il peut être repéré plus aisément. Lorsque l'appareil est dans l'état sécurisé, toutes les données qu'il contient sont chiffrées. Le code long permanent sert à fournir la clé de déchiffrement, par l'un des moyens suivants :

- la clé de chiffrement est identique au code long permanent,
- la clé de chiffrement est obtenue à partir d'une fonction mathématique ayant le code long comme paramètre,
- la clé de chiffrement est fournie par un moyen, interne ou externe à l'appareil, en échange du code long.

Selon une réalisation, l'authentification complète est réalisée par un calculateur, de type carte à mémoire et/ou à microprocesseur.
La carte à mémoire et/ou à microprocesseur permet de fournir une source d'entropie permettant de générer une clé de chiffrement impossible à décrypter en un temps raisonnable. Le calculateur peut également être un crypto processeur.

Selon une réalisation, la carte à mémoire et/ou à microprocesseur est reliée à l'appareil électronique par l'intermédiaire d'un lecteur de carte à mémoire et/ou à microprocesseur connecté de façon amovible à l'appareil.
Le lecteur de carte à mémoire et/ou à microprocesseur peut être sous la forme d'un lecteur connecté sur un port SDIO (Secure Digital Input / Output) de l'appareil électronique. Le lecteur n'a besoin d'être connecté que lorsque qu'une authentification complète doit être effectuée, par exemple deux fois par jour.

Selon une réalisation, la carte à mémoire et/ou à microprocesseur est une carte standard pour téléphone mobile, notamment GSM, de type « SIM ».
Dans le cas où l'appareil électronique à sécuriser est de type téléphone portable, on peut utiliser un deuxième lecteur de carte « SIM », en plus du lecteur habituel, pour contenir la carte à mémoire et/ou à microprocesseur utilisée pour la sécurisation. Dans ce cas, la carte à mémoire et/ou à microprocesseur est présente de manière permanente dans l'appareil, ce qui évite les problèmes d'encombrement dus à l'utilisation d'un lecteur de carte externe. On peut également, sans ajouter un deuxième lecteur de carte, utiliser la carte SIM présente dans le téléphone. Dans ce cas, le code long permanent est identique au code PIN (Personal Identity Number) de la carte fourni par un opérateur de téléphonie mobile, par exemple.

Dans une réalisation, la clé de chiffrement est stockée dans une entrée de l'annuaire de la carte SIM. Elle n'est donc accessible que sur entrée du code long.

Selon une réalisation, lorsque l'utilisateur a entré le code long permanent, la carte à mémoire et/ou à microprocesseur fournit un code court qui est également inscrit dans la mémoire de l'appareil.
Ce code sera utilisé par la suite pour procéder aux authentifications légères.

Selon une réalisation, on fait passer un appareil qui se trouve dans l'état de verrouillage intermédiaire dans l'état sécurisé lorsque l'utilisateur entre un code court erroné.
Ainsi, un fraudeur ne pourra pas effectuer une recherche exhaustive du code court. Dans ce cas, si l'utilisateur commet une erreur lors de l'entrée du code, il doit alors entrer de nouveau le code long permanent.

Selon une réalisation, le renouvellement du code court éphémère est synchronisé avec le renouvellement d'une clé de session utilisée pour la connexion de l'appareil électronique avec un serveur permettant des échanges de données.
Si l'appareil électronique est utilisé pour échanger des données avec un serveur, par exemple un serveur de courrier électronique, il dispose de clés de session utilisées pour sécuriser les communications avec ce serveur. Ces clés doivent être régulièrement renouvelées, sur une requête de l'appareil électronique ou du serveur. Ce renouvellement de clé de session peut être réalisé de manière synchronisée avec celui du code court, ce qui assure un renouvellement régulier de la clé de session.

Selon une réalisation, lorsqu'un appareil électronique est dans l'état sécurisé, toutes les données utilisées pour les authentifications sont absentes de la mémoire de l'appareil.
En effet, lorsque l'appareil électronique est dans l'état déverrouillé ou dans l'état de verrouillage intermédiaire, il contient en mémoire des données d'authentification telles que le code court ou la clé de déchiffrement permettant d'accéder aux données chiffrées en mémoire. Ainsi, lorsque l'appareil passe dans l'état sécurisé, les données en mémoire sont effacées, et ainsi on assure une plus grande sécurité de l'appareil, puisque, dans ce cas, il est impossible d'accéder aux données d'authentification. En effet, même si un fraudeur réussissait à pénétrer dans l'appareil par un moyen détourné, il n'aurait accès qu'aux données qui sont inscrites dans la mémoire sous une forme non chiffrée, c'est-à-dire les données système.

Selon une réalisation, l'appareil passe en mode sécurisé à la demande de l'utilisateur.
Ainsi, lorsque l'utilisateur se trouve dans un endroit qu'il considère comme « à risque », il peut demander à passer en mode sécurisé, quel que soit l'état dans lequel se trouve l'appareil électronique (état déverrouillé ou état de verrouillage intermédiaire), afin de protéger ses données sensibles dans le cas où l'appareil électronique lui serait subtilisé.

Selon une réalisation, l'accès à certaines données nécessitant un niveau de protection supérieur est conditionné par une authentification complète, même si l'appareil se trouve dans l'état déverrouillé ou dans l'état de verrouillage intermédiaire.
Si l'utilisateur utilise l'appareil électronique pour conserver des données sensibles d'un degré supérieur, il peut choisir de les protéger de manière plus importante que les autres données, c'est-à-dire en exigeant l'entrée du code long permanent pour chaque accès à ces données. Ceci permet d'assurer que ces données ne seront pas consultables, même si l'appareil électronique est subtilisé alors qu'il est dans l'état déverrouillé.

Selon une réalisation, le code long permanent prend la forme d'une suite d'au moins huit lettres et/ou chiffres et/ou symboles.
Ainsi, le code long peut être choisi de telle sorte qu'il n'est décryptable par aucun algorithme en un temps raisonnable.

Selon une réalisation, le code court éphémère prend la forme d'une suite d'au moins deux lettres et/ou chiffres et/ou symboles.
On choisira de préférence un petit nombre de lettres, par exemple deux ou trois. Le fait d'utiliser des lettres rend le code court plus facile à mémoriser. En effet, ce code étant amené à changer régulièrement, par exemple plusieurs fois par jour, il doit être facile à retenir pour l'utilisateur, et également très rapide à entrer dans l'appareil électronique.

D'autres caractéristiques et avantages de l'invention apparaîtront avec la description non limitative de certains de ses modes de réalisation, cette description étant effectuée à l'aide des figures sur lesquelles :
- la figure 1 représente un système utilisant un procédé de sécurisation conforme à l'invention, et
- la figure 2 représente un graphe états transitions illustrant les différents états dans lesquels se trouve un appareil utilisant un procédé conforme à l'invention.

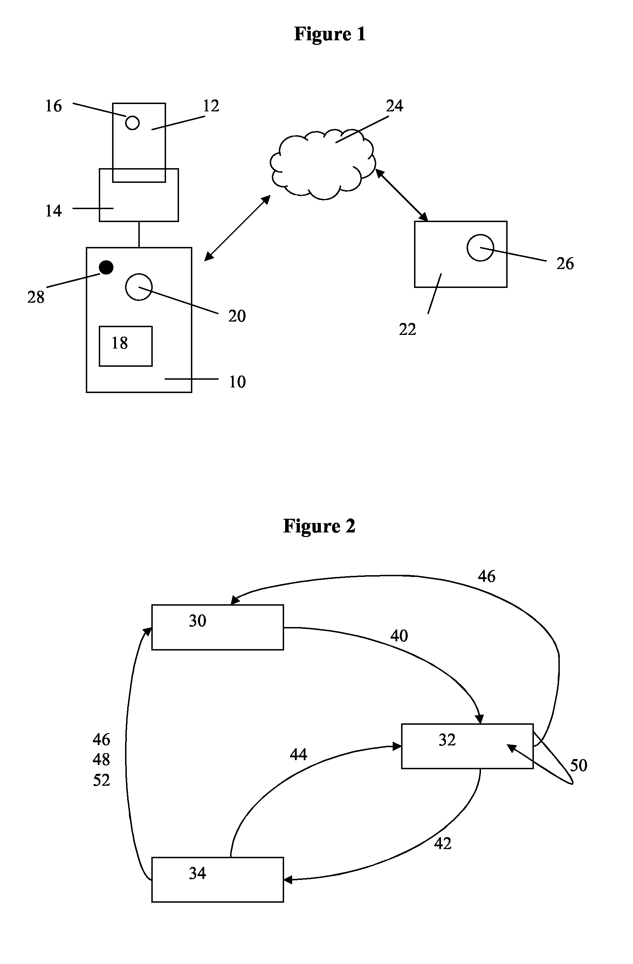

Le système représenté sur la figure 1 comporte un appareil électronique 10 qui est sécurisé à l'aide d'une carte à microprocesseur 12. Cette carte à microprocesseur 12 est reliée à l'appareil électronique par l'intermédiaire d'un lecteur de carte 14 qui est connecté à l'appareil via un port SDIO (Secure Digital Input/Output). Cette connexion est amovible, c'est-à-dire que l'utilisateur ne branche le lecteur de carte que lorsqu'il a besoin d'effectuer une authentification complète.
Cette amovibilité permet de résoudre le problème de l'encombrement qui pourrait découler de l'utilisation d'un lecteur de carte externe. En effet, même si le lecteur présente un volume assez important par rapport au volume de l'appareil électronique, ceci ne constitue pas une gêne pour l'utilisateur puisqu'il peut l'enlever dès qu'il a entré son code long permanent.
Dans l'exemple, la carte à microprocesseur est une carte à puce Javacard munie d'une applet de sécurité 16. Cette applet permet de vérifier le code long permanent entré par l'utilisateur et de générer ensuite le code court à durée déterminée. Ce code court est communiqué à l'appareil 10 qui le stocke dans sa mémoire 18. Ce code est ensuite utilisé par le logiciel de protection 20 qui est en charge de l'authentification légère.
Dans l'exemple, l'appareil est utilisé pour échanger des données avec un serveur central 22. Cet échange de données est effectué par l'intermédiaire d'un réseau radio 24, par exemple de type GPRS. Pour assurer la sécurité des communications établies entre l'appareil et le serveur, ce dernier dispose d'un logiciel de contrôle 26 qui est chargé de contrôler l'utilisation de clés de session lors de l'établissement des connexions. Ce logiciel de contrôle se met en relation, via le réseau radio 24, avec le logiciel de protection 20 de l'appareil, afin de synchroniser le renouvellement des clés de session avec le renouvellement du code court utilisé pour la sécurisation de l'appareil. On assure ainsi un renouvellement régulier de la clé de session de manière transparente pour l'utilisateur.

L'appareil électronique 10 représenté sur cette figure comprend également un bouton « d'urgence » 28 permettant à l'utilisateur de faire passer son appareil en mode sécurisé dès qu'il le souhaite.

La figure 2 représente, sous forme d'un graphe états transitions, les différentes étapes d'authentification qui ont lieu lors de l'utilisation d'un appareil électronique. Lorsque l'utilisateur met en marche son appareil, celui-ci se trouve dans un état sécurisé 30. Pour pouvoir utiliser l'appareil et avoir accès aux données sensibles contenues dans ce dernier, il faut que l'appareil soit dans un état déverrouillé 32. Pour passer de l'état initial sécurisé à cet état de fonctionnement courant, l'utilisateur doit réaliser une authentification complète 40 en entrant son code long permanent. Ce code long dépend du moyen de sécurisation utilisé, et il est par exemple choisi par l'utilisateur. Une fois ce code long entré correctement, l'appareil communique à l'utilisateur un code court qui sera valable pendant un temps déterminé et/ou un nombre déterminé d'utilisations.
L'appareil reste en mode déverrouillé jusqu'à ce que l'un des évènements suivants ait lieu :
- évènement 42 : l'appareil se met en veille ou est éteint.
- évènement 46 : l'utilisateur demande à repasser en mode sécurisé.
   Dans le premier cas (évènement 42), l'appareil passe dans un état 34 de verrouillage intermédiaire. Pour sortir de cet état et retourner à l'état déverrouillé, l'utilisateur doit effectuer une authentification légère 44 en entrant le code court qui lui a été communiqué auparavant par l'appareil. Par contre, si l'un des évènements suivants se produit, l'appareil passe aussitôt en mode sécurisé :

- évènement 46 : l'utilisateur a demandé à repasser en mode sécurisé,
- évènement 48 : la durée de validité du code court est écoulée, ou le nombre d'utilisations permises du code court est dépassé,
- évènement 52 : l'utilisateur a entré un code court erroné.
   Dans le deuxième cas (évènement 46), l'appareil repasse directement dans l'état sécurisé.
   A chaque fois que l'appareil repasse en mode sécurisé, l'utilisateur doit recommencer une authentification complète 40.
   D'autre part, certaines données sensibles contenues dans l'appareil peuvent nécessiter un niveau de protection supérieur. Ainsi, lorsqu'un accès à ces données est demandé dans l'état déverrouillé (évènement 50), l'utilisateur doit entrer le code long permanent.

## Revendications

1. Procédé de sécurisation pour appareils électroniques disposant d'une mémoire destinée à contenir des données, notamment utilisé pour sécuriser un ordinateur de poche (10) de type « Personal Digital Assistant (PDA) », utilisant un code de sécurité long permanent et un code de sécurité court valable pendant une durée déterminée et/ou un nombre déterminé d'utilisations, et tel que l'appareil électronique se trouve dans l'un des trois états de sécurité suivants :
- état déverrouillé (32) dans lequel l'accès aux données sensibles n'est pas protégé,
- état de verrouillage intermédiaire (34) dans lequel l'accès aux données sensibles est conditionné par une authentification légère (44), c'est à dire l'entrée du code court, et
- état sécurisé (30) dans lequel l'accès aux données est conditionné par une authentification complète (40), c'est-à-dire l'entrée du code long permanent, et qui conduit au renouvellement du code court éphémère.

2. Procédé selon la revendication 1 dans lequel l'authentification complète (40) est réalisée par un calculateur (12), de type carte à mémoire et/ou à microprocesseur.

3. Procédé selon la revendication 2 dans lequel la carte à mémoire est reliée à l'appareil électronique par l'intermédiaire d'un lecteur (14) de carte à mémoire et/ou à microprocesseur connecté de façon amovible à l'appareil.

4. Procédé selon la revendication 2 ou 3 dans lequel la carte à mémoire et/ou à microprocesseur est une carte standard pour téléphone mobile, notamment GSM, de type « SIM ».

5. Procédé selon la revendication 4 dans lequel la clé de chiffrement est stockée dans une entrée de l'annuaire de la carte SIM.

6. Procédé selon l'une des revendications 2 à 5 dans lequel, lorsque l'utilisateur a entré le code long permanent, la carte à mémoire et/ou à microprocesseur fournit un code court et ce code court est inscrit dans la mémoire de l'appareil électronique.

7. Procédé selon l'une des revendications précédentes dans lequel on fait passer un appareil qui se trouve dans l'état de verrouillage intermédiaire (34) dans l'état sécurisé (30) lorsque l'utilisateur entre un code court erroné.

8. Procédé selon l'une des revendications précédentes dans lequel le renouvellement du code court éphémère est synchronisé avec le renouvellement d'une clé de session utilisée pour la connexion de l'appareil électronique avec un serveur (22) permettant des échanges des données.

9. Procédé selon l'une des revendications précédentes dans lequel, lorsqu'un appareil électronique (10) est dans l'état sécurisé (30), toutes les données utilisées pour les authentifications sont absentes de la mémoire (18) de l'appareil.

10. Procédé selon l'une des revendications précédentes dans lequel l'appareil passe dans l'état sécurisé (30) à la demande de l'utilisateur.

11. Procédé selon l'une des revendications précédentes dans lequel l'accès à certaines données nécessitant un niveau de protection supérieur est conditionné par une authentification complète (40), même si l'appareil se trouve dans l'état déverrouillé (32) ou dans l'état de verrouillage intermédiaire (34).

12. Procédé selon l'une des revendications précédentes dans lequel le code long permanent prend la forme d'une suite d'au moins huit lettres et/ou chiffres et/ou symboles.

13. Procédé selon l'une des revendications précédentes dans lequel le code court éphémère prend la forme d'une suite d'au moins deux lettres et/ou chiffres et/ou symboles.
